# EUROPÄISCHE PATENTSCHRIFT

(11) **EP 3 303 990 B1**
(45) Veröffentlichungstag und Bekanntmachung des Hinweises auf die Patenterteilung: **03.03.2021**
(21) Anmeldenummer: 16723390.7
(22) Anmeldetag: 19.05.2016
(51) Int. Cl.: G01B 21/04, G01B 5/008, G01B 11/00

(54) **BELEUCHTUNGSSTEUERUNG BEIM EINSATZ VON OPTISCHEN MESSGERÄTEN**
LIGHTING CONTROL WHEN USING OPTICAL MEASURING DEVICES
COMMANDE D'ÉCLAIRAGE LORS DE L'UTILISATION D'APPAREILS DE MESURE OPTIQUES

(30) Priorität: 27.05.2015 DE 102015108389
(43) Veröffentlichungstag der Anmeldung: 11.04.2018
(73) Patentinhaber: Carl Zeiss Industrielle Messtechnik GmbH, 73447 Oberkochen (DE)
(72) Erfinder: SEITZ, Dominik, 73525 Schwaebisch Gmuend (DE); HOECHERL, David, 73434 Aalen (DE)
(74) Vertreter: Witte, Weller & Partner Patentanwälte mbB
(86) Internationale Anmeldenummer: PCT/EP2016/061316
(87) Internationale Veröffentlichungsnummer: WO 2016/188866

(56) Entgegenhaltungen:
- US-A1- 2004 075 841
- US-A1- 2005 177 339

## Beschreibung

Die vorliegende Erfindung betrifft ein Koordinatenmessgerät, mit mindestens einem optischen Sensor zur Bildaufnahme in einem Bilderfassungsbereich während eines Bildaufnahmezeitraums, einem Steuersignalgeber, der ein den Bildaufnahmezeitraum repräsentierendes Steuersignal bereitstellt, einer Messbeleuchtungsanordnung zum Beleuchten des Bilderfassungsbereichs, und mit einer Steuereinrichtung. Des Weiteren betrifft die vorliegende Erfindung ein Verfahren zur Beleuchtungssteuerung für ein Messgerät mit mindestens einem optischen Sensors zur Bildaufnahme in einem Bilderfassungsbereich.

Koordinatenmessgeräte sind im Stand der Technik allgemein bekannt. Sie dienen dazu, beispielsweise im Rahmen einer Qualitätssicherung Werkstücke zu überprüfen oder die Geometrie eines Werkstücks vollständig im Rahmen eines sogenannten "Reverse Engineering" zu ermitteln. Darüber hinaus sind vielfältige weitere Anwendungsmöglichkeiten denkbar.

In derartigen Koordinatenmessgeräten können verschiedene Arten von Sensoren zur Anwendung kommen, um die Koordinaten eines zu vermessenden Werkstücks zu erfassen. Beispielsweise sind hierzu taktil messende Sensoren bekannt, wie sie beispielsweise von der Anmelderin unter der Produktbezeichnung "VAST", "VAST XT" oder "VAST XXT" vertrieben werden. Hierbei wird die Oberfläche des zu vermessenden Werkstücks mit einem Taststift angetastet, dessen Koordinaten im Messraum ständig bekannt sind. Ein derartiger Taststift kann auch entlang der Oberfläche eines Werkstücks bewegt werden, so dass in einem solchen Messvorgang im Rahmen eines sogenannten "Scanning-Verfahrens" eine Vielzahl von Messpunkten in festgelegten zeitlichen Abständen erfasst werden kann.

Darüber hinaus ist es bekannt, optische Sensoren einzusetzen, die ein berührungsloses Erfassen der Koordinaten eines Werkstücks ermöglichen. Ein Beispiel für einen derartigen optischen Sensor ist der unter der Produktbezeichnung "ViScan" von der Anmelderin vertriebene optische Sensor.

Die Sensoren können dann in verschiedenen Arten von Messaufbauten verwendet werden. Ein Beispiel für einen solchen Messaufbau ist das Produkt "O-INSPECT" der Anmelderin. Bei einem derartigen Gerät finden sowohl ein optischer Sensor als auch ein taktiler Sensor Anwendung, um verschiedene Prüfaufgaben an einer Maschine und idealerweise mit einer einzigen Aufspannung eines zu vermessenden Werkstücks durchzuführen.

Sensorsysteme mit optischen Sensoren finden in der Koordinatenmesstechnik zunehmend Bedeutung. Dabei zeichnen sich optische Sensoren insbesondere durch eine hohe Geschwindigkeit des Messvorgangs aus. Auf diese Weise lassen sich viele Prüfaufgaben beispielsweise in der Medizintechnik, der Kunststofftechnik, der Elektronik und der Feinmechanik durchführen. Selbstverständlich sind darüber hinaus auch verschiedene andere Aufbauten denkbar.

Klassischerweise ist der optische Sensorkopf bzw. der optische Sensor mit einem Trägersystem verbunden, welches das optische Sensorsystem stützt und bewegt. Im Stand der Technik sind verschiedene Trägersysteme bekannt, beispielsweise Portalsysteme, Ständer-, Horizontalarm- und Armsysteme, und alle Arten von Robotersystemen. Die Trägersysteme können dabei des Weiteren Systemkomponenten aufweisen, die ein möglichst flexibles Positionieren des Sensorkopfs ermöglichen. Ein Beispiel hierfür ist das unter der Bezeichnung "RDS" vertriebene Dreh-Schwenk-Gelenk der Anmelderin. Darüber hinaus können verschiedene Adapter vorgesehen sein, um die unterschiedlichen Systemkomponenten des Trägersystems untereinander und mit dem Sensorsystem zu verbinden.

Des Weiteren ist es in der Koordinatenmesstechnik üblich, dass bei der Vermessung von Objekten mit unterschiedlichen Beleuchtungsarten gearbeitet werden kann. Beispielsweise kann eine Auflichtbeleuchtung vorgesehen werden, die beispielsweise als Hellfeld-Dunkelfeldbeleuchtung eingerichtet sein kann. Die entsprechenden optischen Sensoren weisen dann eine Videokamera und/oder eine Bildkamera und eine entsprechende Beleuchtung für das Werkstück auf. Des Weiteren ist üblicherweise eine feste Abbildungsoptik vorgesehen, die das zu vermessende Werkstück auf die Kamera bzw. die optischen Sensoren der Kamera abbildet. Für jeden Anwendungsfall bzw. jede Messart sind dabei in der Regel spezifische optische Sensoren mit fest integrierten Beleuchtungen und Abbildungsoptiken vorgesehen.

Des Weiteren kann die vorliegende Erfindung auch in anderen Messgeräten, beispielsweise in Mikroskopen, Anwendung finden.

Bei dem Einsatz von optischen Messgeräten will ein Nutzer - wie auch bei taktilen Messgeräten - den aktuellen Messpunkt bzw. den von der Kamera erfassten Bereich, die sog. ROI (Region of interest), vor allem beim Einmessen eines Prüfplans oder bei Einzelteilprüfungen sehen. Dabei wird die ROI auf das zu vermessende Werkstück visualisiert. Bei taktilen Messgeräten ist dies einfach bereitzustellen, da die aktuelle Position bzw. der aktuelle Messpunkt durch die Position der Tastkugel am taktilen Sensor zu erkennen ist. Bei optischen Messgeräten ist jedoch bei den meisten zu vermessenden Werkstücken, vor allem in hohen Vergrößerungen, der aktuell von dem optischen Sensor erfasste Bereich nicht ohne weiteres einer tatsächlichen Position auf dem Werkstück zuzuordnen, selbst wenn der erfasste Bereich auf einem Monitor dargestellt wird.

Daher wird vorgeschlagen, die ROI bzw. den Bilderfassungsbereich mittels beispielsweise eines Laserstrahls zu markieren. Der Laserstrahl kann beispielsweise von einer am Messobjekt angebrachten Lichtquelle ausgestrahlt werden.

Bei dem Einsatz eines solchen Lasers ist jedoch dann ein heller Fleck im Bilderfassungsbereich sichtbar. Wird der Laser zudem durch das gesamte oder einen Teil des Objektivs gelenkt, ergeben sich aufgrund von Reflexionen an den Linsenelementen helle Speckle-Muster. Dies alles hat den Nachteil zur Folge, dass während des Markierens des Bilderfassungsbereichs nicht gemessen werden kann. Dies verlangsamt den Vorgang des Einrichtens eines Messgeräts bzw. das Vermessen einzelner Bauteile.

Im Stand der Technik wurden bereits verschiedene Beleuchtungssteuerungsverfahren für optische Messgeräte vorgeschlagen, so beispielsweise in der Druckschrift DE 10 2014 208 424 A1, die ein Verfahren zum Einstellen der Beleuchtung einer Bildmessvorrichtung zeigt, bei dem eine Beziehung zwischen einem Helligkeitsführungswert und einem einer Helligkeit entsprechenden Stromwert auf der Grundlage einer vorher enthaltenen Beziehung zwischen einem durch eine Licht emittierende Einrichtung fließenden Strom und der Helligkeit berechnet wird, und mit den Schritten des Erstellens einer den Helligkeitsführungswert, den Stromwert und die Helligkeit enthaltenden Kalibriertabelle, des Berechnens einer erforderlichen Helligkeit während einer Messung, des Berechnens einer der erforderlichen Helligkeit entsprechenden Helligkeitsführungswerts und des Einstellens des Helligkeitsführungswerts unter Verwendung der Kalibriertabelle.

Des Weiteren wurde in der Druckschrift EP 2 078 923 A1 eine Bildmesseinrichtung, die eine Kamera aufweist, die Bilder einer Mehrzahl von Messpunkten basierend auf einer voreingestellten Messprozedur ermittelt und eine Beleuchtungseinheit, die die Messpunkte beleuchtet.

Des Weiteren zeigt die Druckschrift DE 10 2014 209 471 A1 ein Verfahren zum Steuern eines Teils zum Generieren eines strukturierten Beleuchtungsmusters, um ein Werkstück während einer Bilderfassung durch eine Kamera in einem Präzisierungsbildverarbeitungsinspektionssystem zu beleuchten.

Die Druckschrift US 2014/0152794 A1 zeigt ein Messmikroskop, ein Bilderzeugungsverfahren, ein Betriebsprogramm für ein Messmikroskop und ein computerlesbares Aufzeichnungsmedium .

Die Druckschrift US 2003/067613 A1 zeigt einen Versatzsensor mit einem Lichtemittierenden optischen System.

Die Druckschrift DE 10 2012 221 374 A1 zeigt ein verfahren zur Planung einer dentalen Behandlung.

Die Druckschrift US 2014/043610 A1 zeigt eine Vorrichtung zum Inspizieren eines Messobjekts mit einem Triangulationssensor.

Es verbleibt jedoch ein Bedarf an einem Messgerät und einem Verfahren zur Beleuchtungssteuerung für ein Messgerät, das die voranstehend beschriebenen Nachteile beseitigt. Es ist daher eine Aufgabe der vorliegenden Erfindung, ein verbessertes Verfahren zur Beleuchtungssteuerung und ein Koordinatenmessgerät, mit mindestens einem optischen Sensor anzugeben, das eine verbesserte Markierung eines Bilderfassungsbereichs bereitstellt.

Gemäß einem ersten Aspekt der Erfindung wird daher ein Koordinatenmessgerät, gemäß Anspruch 1 bereitgestellt

Optische Sensoren, insbesondere Kameras, die in der optischen Messtechnik eingesetzt werden, bieten die Möglichkeit, den aktuellen Status des Bildeinzugs über sogenannte "Trigger" anzuzeigen. Ein solcher "Trigger" wird im Folgenden auch als Steuersignalgeber bezeichnet. Somit ist einem nachfolgenden System bzw. der Elektronik oder der Steuereinrichtung des Messgeräts bekannt, ob mittels des mindestens einen optischen Sensors gegenwärtig ein "Bild gemacht wird". Der Status eines Shutters bzw. einer Blende wird erfasst und somit weitergegeben, ob Licht mittels des mindestens einen optischen Sensors gesammelt wird oder nicht. Auf diese Weise werden Messbeleuchtungsanordnungen nur dann eingeschaltet, wenn der mindestens eine optische Sensor auch Licht benötigt. So kann ein Wärmeeintrag in das gesamte System gering gehalten werden.

Die Erfindung nutzt nunmehr dieses Prinzip der Schaltung von Beleuchtungsanordnungen abhängig von dem Steuersignal, um diejenigen Lichtquellen bzw. Beleuchtungsanordnungen, die nicht zu der Messbeleuchtung während des Bilderfassungszeitraums beitragen, nur dann einzuschalten, wenn kein Licht für den mindestens einen optischen Sensor gesammelt wird, d.h. kein Bild gemacht wird. Bei dieser weiteren Beleuchtungsanordnung, die nicht zu der Messbeleuchtung beiträgt, kann es sich beispielsweise um den voranstehend beschriebenen Laser bzw. einen Laserpointer handeln. Eine weitere Alternative, um eine Laserbeleuchtungseinrichtung zur Markierung des Bilderfassungsbereichs einsparen zu können, ist die Verwendung einer in vielen Messgeräten ohnehin vorhandenen Hellfeld-Auflichtbeleuchtungseinrichtung. Dieses kann bei der Verwendung anderer Beleuchtungsanordnungen zum Markieren des Bilderfassungsbereichs verwendet werden. Bauartbedingt beleuchtet die Hellfeld-Auflichtbeleuchtungseinrichtung den Bilderfassungsbereich. Wird die Hellfeld-Auflichtbeleuchtungseinrichtung vollständig durch das Objektiv, insbesondere ein Zoom-Objektiv gelenkt, bildet dies darüber hinaus den Vorteil, dass das von der Hellfeld-Auflichtbeleuchtungseinrichtung ausgeleuchtete Feld immer so groß ist wie der Bilderfassungsbereich des mindestens einen optischen Sensors. Somit kann auch mittels der Hellfeld-Auflichtbeleuchtungseinrichtung eine Markierung des Bilderfassungsbereichs erfolgen.

Beispielsweise beim Einmessen von Abläufen bzw. Prüfplänen oder beim halbautomatischen Messen von Einzelteilen kann die weitere Beleuchtungsanordnung so immer angeschaltet bleiben, ohne jedoch die Messgenauigkeit oder die Messergebnisse negativ zu beeinflussen. Wenn die weitere Beleuchtungsanordnung bis auf die relativ kurzen Bildaufnahmezeiträume angeschaltet bleiben kann, werden Temperatureinflüsse auf das gesamte Messgerät minimiert, da bei Temperatureinfluss mit zeitlich unregelmäßigen Einflüssen durch einen konstanten Temperatureinfluss ersetzt werden kann.

Da die mindestens eine weitere Beleuchtungsanordnung nur eingeschaltet ist, wenn der mindestens eine optische Sensor kein Licht sammelt, wird die weitere Beleuchtungsanordnung, auch wenn sie zur Markierung des Bilderfassungsbereichs dient, nicht von dem mindestens einen optischen Sensor erfasst, da sie vor dem Bildaufnahmezeitraum ausgeschaltet wird. Somit kann die weitere Beleuchtungsanordnung nicht auf die Bilderfassung Einfluss nehmen. Auch ein manuelles Ein- und Ausschalten eines Markierungslichts wird überflüssig.

Somit ist die weitere Beleuchtungsanordnung eine in dem Messgerät vorgesehene Beleuchtungsanordnung oder Lichtquelle. Häufig weisen Messgeräte mit optischen Sensoren mehrere Beleuchtungsanordnungen für verschiedene Messverfahren auf. Eine von diesen Beleuchtungsanordnungen, die zur Bildaufnahme nicht benötigt wird, kann dann die weitere Beleuchtungsanordnung bereitstellen. Insbesondere ist somit die weitere Beleuchtungsanordnung verschieden von der Messbeleuchtungsanordnung. Das Messgerät weist grundsätzlich mindestens eine weitere Beleuchtungsanordnung auf. Eine von dieser mindestens einen weiteren Beleuchtungsanordnung kann somit das Messgerät aufweisen. Alternativ oder kumulativ ist es jedoch auch möglich, dass das Messgerät lediglich zum Ansteuern einer der mindestens einen weiteren Beleuchtungsanordnung ausgebildet ist, die nicht Teil des Messgeräts ist. Beispielsweise kann es sich hierbei um eine Umgebungsbeleuchtungsanordnung handeln.

Des Weiteren ist vorgesehen, dass die weitere Beleuchtungsanordnung eine Markierungsbeleuchtungseinrichtung zum Markieren des Bilderfassungsbereichs ist.

Auf diese Weise kann der Bilderfassungsbereich für den Nutzer außerhalb des Bildaufnahmezeitraums markiert werden, insbesondere an einem zu vermessenden Werkstück markiert werden.

Des Weiteren ist vorgesehen, dass das Messgerät ein Objektiv aufweist, und wobei eine Bildaufnahme des mindestens einen optischen Sensors durch das Objektiv erfolgt. Dabei ist vorgesehen, dass das Objektiv ein Zoom-Objektiv ist.

Auf diese Weise kann ein Bilderfassungsbereich des mindestens einen optischen Sensors in seiner Größe variiert werden.

Des Weiteren ist vorgesehen, dass die weitere Beleuchtungsanordnung ein Laser zum Markieren des Bilderfassungsbereichs ist.

Auf diese Weise kann mittels eines Lasers oder eines Laserpointers der Bilderfassungsbereich markiert werden. Ein Laser ist in der Regel aufgrund der guten Erkennbarkeit insbesondere dazu geeignet, auf Werkstücken aller Art den Bilderfassungsbereich zu markieren.

Des Weiteren ist vorgesehen, dass der Laser derart angeordnet ist, dass ein Markierungsstrahlengang des Lasers außerhalb des Objektivs verläuft.

Insbesondere kann beispielsweise vorgesehen sein, dass der Laser seitlich an dem Objektiv angeordnet ist und somit direkt auf das Werkstück einstrahlen kann.

Gemäß einem weiteren Aspekt der Erfindung wird ein Verfahren zur Beleuchtungssteuerung für ein Koordinatenmessgerät nach Anspruch 3 bereitgestellt.

Dabei ist vorgesehen, dass das Beleuchten mit der weiteren Beleuchtungsanordnung eine erste Zeitdauer versetzt nach einem Ende des mindestens einen Bildaufnahmezeitraums beginnt.

Abhängig von der Bildaufnahmefrequenz einer Kamera kann der Bildaufnahmezeitraum mit einer bestimmten Zeitdauer festgelegt werden. Aufgrund der bekannten Zyklusdauer anhand der Bildaufnahmefrequenz der Kamera ist ein Zeitraum zwischen dem Ende eines Bildaufnahmezeitraums und dem Beginn des darauffolgenden Bildaufnahmezeitraums bekannt. Hiermit kann nunmehr außerhalb des Bildaufnahmezeitraums die Beleuchtung mittels der weiteren Beleuchtungsanordnung erfolgen. Dabei kann der Beginn des Einschaltens der Weiterbeleuchtungseinrichtung um einen Zeitraum versetzt nach dem Ende des Bildaufnahmezeitraums beginnen. Auf diese Weise kann sichergestellt werden, dass kein "Hineinleuchten" der weiteren Beleuchtungsanordnung in die Bildaufnahme erfolgen.

Des Weiteren ist vorgesehen, dass das Beleuchten mit der weiteren Beleuchtungsanordnung um eine zweite Zeitdauer versetzt vor dem Beginn des mindestens einen Bildaufnahmezeitraums endet.

Auf diese Weise kann wiederum festgelegt werden, dass die zweite Beleuchtungsanordnung nicht in den Bildaufnahmezeitraum hineinleuchtet. Ein Nachleuchten der weiteren Beleuchtungsanordnung wird vermieden. Dies geschieht, indem die zweite Zeitdauer von genügender Länge festgesetzt wird.

Des Weiteren ist vorgesehen, dass eine Mehrzahl von Bildaufnahmezeiträumen festgelegt ist, wobei ein jeweiliger Beginn aufeinanderfolgender Bildaufnahmezeiträume zeitlich um eine Zyklusdauer voneinander beabstandet sind.

Auf diese Weise ergibt sich aus einer Frequenz der Bildaufnahme des mindestens einen optischen Sensors eine Zyklusdauer der jeweiligen Beginne der aufeinanderfolgenden Bildaufnahmezeiträume. Der Bildaufnahmezeitraum in seiner Länge oder aber auch der ersten und/oder der zweiten Zeitdauer können dann beispielsweise abhängig von der Zyklusdauer festgelegt werden. Auch ihr jeweiliger Beginn kann abhängig von dem Beginn der Zyklusdauer bzw. des Bildaufnahmezeitraums festgelegt werden.

Des Weiteren ist vorgesehen, dass die Länge des Bildaufnahmezeitraums kleiner als 20 % der Zyklusdauer ist. Insbesondere kann auch vorgesehen sein, dass die Länge des Bildaufnahmezeitraums kleiner als 15 % der Zyklusdauer ist.

In einer weiteren kann vorgesehen sein, dass eine Länge eines Einschaltzeitraums der weiteren Beleuchtungsanordnung bzw. der mindestens einen weiteren Beleuchtungsanordnung außerhalb des Bildaufnahmezeitraums kleiner als 67 % der Länge der Zyklusdauer ist.

Auf diese Weise kann die verbleibende Dauer von 33 % der Zyklusdauer für den Bildaufnahmezeitraum sowie die erste und/oder die zweite Zeitdauer aufgewendet werden.

Gemäß einem nicht beanspruchten Beispiel wird ein Computerprogrammprodukt, insbesondere ein nicht flüchtiges Computerprogrammprodukt, mit einem Computerprogramm mit Programmcodes zum Durchführen des obigen Verfahrens der Erfindung oder einer seiner Ausgestaltungen vorgeschlagen, wenn das Computerprogramm auf einem Messgerät ausgeführt wird.

Die eingangs genannte Aufgabe wird somit vollkommen gelöst.

Somit ist die weitere Beleuchtungsanordnung eine in dem Messgerät vorgesehene Beleuchtungsanordnung oder Lichtquelle. Häufig weisen Messgeräte mit optischen Sensoren mehrere Beleuchtungsanordnungen für verschiedene Messverfahren auf. Eine von diesen Beleuchtungsanordnungen, die zur Bildaufnahme nicht benötigt wird, kann dann die weitere Beleuchtungsanordnung bereitstellen. Insbesondere ist somit die weitere Beleuchtungsanordnung verschieden von der Messbeleuchtungsanordnung. Das Messgerät weist grundsätzlich mindestens eine weitere Beleuchtungsanordnung auf. Eine von dieser mindestens einen weiteren Beleuchtungsanordnung kann somit das Messgerät aufweisen. Alternativ oder kumulativ ist es jedoch auch möglich, dass das Messgerät lediglich zum Ansteuern einer der mindestens einen weiteren Beleuchtungsanordnung ausgebildet ist, die nicht Teil des Messgeräts ist. Beispielsweise kann es sich hierbei um eine Umgebungsbeleuchtungsanordnung handeln.

Gemäß einer weiteren Ausgestaltung des Messgeräts kann vorgesehen sein, dass die weitere Beleuchtungsanordnung eine Markierungsbeleuchtungseinrichtung zum Markieren des Bilderfassungsbereichs ist.

Auf diese Weise kann der Bilderfassungsbereich für den Nutzer außerhalb des Bildaufnahmezeitraums markiert werden, insbesondere an einem zu vermessenden Werkstück markiert werden.

In einer weiteren Ausgestaltung des Messgeräts kann vorgesehen sein, dass das Messgerät ein Objektiv aufweist, und wobei eine Bildaufnahme des mindestens einen optischen Sensors durch das Objektiv erfolgt. Insbesondere kann dabei vorgesehen sein, dass das Objektiv ein Zoom-Objektiv ist.

Auf diese Weise kann ein Bilderfassungsbereich des mindestens einen optischen Sensors in seiner Größe variiert werden.

In einer weiteren Ausgestaltung des Messgeräts kann vorgesehen sein, dass einer des mindestens einen optischen Sensors eine Kamera ist. In einer weiteren Ausgestaltung des Messgeräts kann vorgesehen sein, dass genau ein optischer Sensor vorgesehen ist, wobei der optische Sensor eine Kamera ist.

Auf diese Weise wird es möglich, aus mehreren Einzelbildern bestehende Bildaufnahmesequenzen zu erfassen. Dabei können die Einzelbilder mit einer bestimmten Frequenz aufgenommen werden, woraus sich eine Zyklusdauer der Bildaufnahme ergibt.

In einer weiteren Ausgestaltung des Messgeräts kann vorgesehen sein, dass die weitere Beleuchtungsanordnung eine Hellfeld-Auflichtbeleuchtungseinrichtung ist. Mit anderen Worten ist eine Beleuchtungsanordnung der mindestens einen weiteren Beleuchtungsanordnung eine Hellfeld-Auflichtbeleuchtungseinrichtung.

Auf diese Weise kann eine Hellfeld-Auflichtbeleuchtungseinrichtung, die in dem Messgerät vorgesehen ist, aber für einen bestimmten Messvorgang nicht benötigt wird, zur Markierung eines Bilderfassungsbereichs benutzt werden. Insbesondere, wenn die Hellfeld-Auflichtbeleuchtungseinrichtung durch das gesamte Objektiv, insbesondere ein Zoom-Objektiv, geführt wird, so dass der Beleuchtungs-Strahlengang der Hellfeld-Auflichtbeleuchtungseinrichtung vollständig durch das Objektiv, insbesondere das Zoom-Objektiv, verläuft, wird auf diese Weise der Bilderfassungsbereich des mindestens einen optischen Sensors von der Hellfeld-Auflichtbeleuchtungseinrichtung ausgeleuchtet.

In einer weiteren Ausgestaltung des Verfahrens kann vorgesehen sein, dass die erste und/oder die zweite Zeitdauer eine Länge von mindestens 0,5 Millisekunden und höchstens 2 Millisekunden aufweist. Insbesondere kann die Länge der ersten und/oder der zweiten Zeitdauer 1 Millisekunde betragen.

Diese Werte haben sich als praktikabel herausgestellt, um ein Hineinleuchten der weiteren Beleuchtungsanordnung in die Bildaufnahme zu vermeiden.

Grundsätzlich kann in allen Ausgestaltungen des Messgeräts oder des Verfahrens vorgesehen sein, dass genau eine weitere Beleuchtungsanordnung vorgesehen ist. Es kann aber auch vorgesehen sein, dass mehr als eine weitere Beleuchtungsanordnung vorgesehen ist. Beispielsweise kann vorgesehen sein, dass zwei weitere Beleuchtungsanordnungen oder drei weitere Beleuchtungsanordnungen vorgesehen sind.

Bei einer Änderung der Iterationszeit der Kamera, d.h. des Bildaufnahmezeitraums kann sich eine Helligkeit der Markierungsbeleuchtung bzw. einer Umgebungsbeleuchtung ändern. Es ist unter Umständen nicht gewollt und kann mit festem Zeitraum abhängig von der Zyklusdauer des mindestens einen optischen Sensors verbessert werden.

In der Regel wird ein optischer Sensor mit einer maximal möglichen Integrationszeit betrieben. In der Praxis hat sich hierfür beispielsweise eine Dauer von 5 Millisekunden herausgestellt. Auf diese Weise ist sichergestellt, dass beispielsweise eine Kamera als optischer Sensor immer mit 30 Hz betrieben werden kann. Dies bedeutet im Umkehrschluss, dass alle 33,3 Millisekunden ein neues Bild erfasst wird. Ein Beginn aufeinanderfolgender Bildaufnahmezeiträume ist somit um 33,3 Millisekunden voneinander zeitlich versetzt. Mit anderen Worten wird alle 33,3 Millisekunden die Markierungsbeleuchtungseinrichtung bzw. die Umgebungsbeleuchtungsanordnung, also die mindestens eine weitere Beleuchtungsanordnung, für maximal 5 Millisekunden ausgeschaltet, um eine Messung nicht zu beeinflussen. Hierauf aufbauend kann die weitere Beleuchtungsanordnung fest, beispielsweise 6 Millisekunden, mit anderen Worten um die erste Zeitdauer beabstandet von dem Ende des Bildaufnahmezeitraums oder des maximalen Bildaufnahmezeitraums beginnen, beispielsweise 6 Millisekunden nach dem Beginn des Bildaufnahmezeitraums bzw. dem Beginn einer Zyklusdauer. Die weitere Beleuchtungsanordnung kann dann beispielsweise 20 Millisekunden lang eingeschaltet bleiben. Auf diese Weise ergibt sich für die zweite Zeitdauer immer noch eine Länge von etwa 7,3 Millisekunden, so dass ein Nachleuchten der Markierungsbeleuchtung bzw. der Umgebungsbeleuchtungsanordnung in den nächsten Bildaufnahmezeitraum nicht erfolgt.

Ausführungsformen der Erfindung sind in der Zeichnung dargestellt und werden in der nachfolgenden Beschreibung näher erläutert. Es zeigen:
- Fig. 1: eine schematische Darstellung eines Messgeräts;
- Fig. 2: eine Ausführungsform eines Messsystems und eine Ausführungsform eines Messgeräts;
- Fig. 3: eine weitere Ausführungsform eines Messgeräts;
- Fig. 4: ein schematisches Ablaufdiagramm eines Verfahrens;
- Fig.: 5a ein erstes zeitliches Ablaufdiagramm der Schaltzustände in einer Ausführungsform; und
- Fig.: 5b eine schematische Darstellung der Schaltzustände in einer weiteren Ausführungsform.

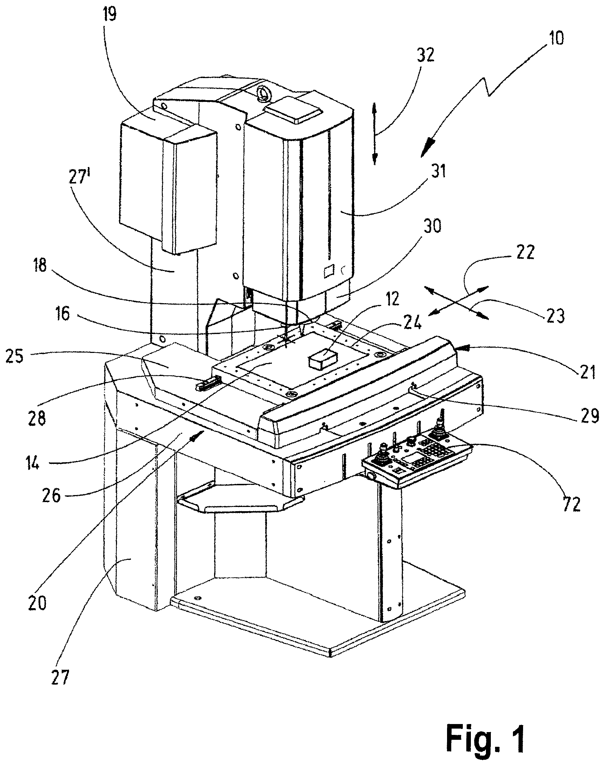

Die Fig. 1 zeigt eine Messgerät 10 zum Inspizieren eines Messobjekts 12, das auf einem Werkstückträger 14 angeordnet ist. In der dargestellten Ausführungsform handelt es sich bei der Messgerät 10 um ein Koordinatenmessgerät. Das Messobjekt 12 wird mittels eines oder mehrerer optischer Sensoren 18 vermessen. Wahlweise können zusätzlich auch einer oder mehrere taktile Sensoren 16 vorgesehen sein.

Koordinatenmessgeräte sind im Stand der Technik allgemein bekannt. Sie dienen dazu, beispielsweise im Rahmen einer Qualitätssicherung Werkstücke zu überprüfen oder die Geometrie eines Werkstücks vollständig im Rahmen eines sogenannten "Reverse Engineering" zu ermitteln. Darüber hinaus sind vielfältige weitere Anwendungsmöglichkeiten denkbar, so beispielsweise auch der zusätzliche Einsatz zum Inspizieren von Oberflächen.

In derartigen Koordinatenmessgeräten können verschiedene Arten von Sensoren zur Anwendung kommen, um die Koordinaten eines zu vermessenden Werkstücks zu erfassen. Beispielsweise sind hierzu taktil messende Sensoren bekannt, wie sie etwa von der Anmelderin unter der Produktbezeichnung "VAST", "VAST XT" oder "VAST XXT" vertrieben werden. Hierbei wird die Oberfläche des zu vermessenden Werkstücks mit einem Taststift angetastet, dessen Koordinaten im Messraum ständig bekannt sind. Ein derartiger Taststift kann auch entlang der Oberfläche eines Werkstücks bewegt werden, so dass in einem solchen Messvorgang im Rahmen eines sogenannten "Scanning-Verfahrens" eine Vielzahl von Messpunkten in festgelegten zeitlichen Abständen erfasst werden kann.

Darüber hinaus ist es bekannt, optische Sensoren einzusetzen, die ein berührungsloses Erfassen der Koordinaten eines Werkstücks ermöglichen. Ein Beispiel für einen derartigen optischen Sensor ist der unter der Produktbezeichnung "ViScan" von der Anmelderin vertriebene optische Sensor.

Die Sensoren können dann in verschiedenen Arten von Messaufbauten verwendet werden. Ein Beispiel für einen solchen Messaufbau ist ein Tischaufbau, wie er in der Fig. 1 gezeigt ist. Ein Beispiel für einen solchen Tischaufbau ist das Produkt "O-INSPECT" der Anmelderin. Bei einem derartigen Gerät finden sowohl ein optischer Sensor als auch ein taktiler Sensor Anwendung, um verschiedene Prüfaufgaben an einer Maschine und idealerweise mit einer einzigen Aufspannung eines zu vermessenden Werkstücks durchzuführen. Auf diese Weise lassen sich einfach viele Prüfaufgaben beispielsweise in der Medizintechnik, der Kunststofftechnik, der Elektronik und der Feinmechanik durchführen. Selbstverständlich sind darüber hinaus auch verschiedene andere Aufbauten denkbar.

Derartige Sensorsysteme bzw. Sensorköpfe, die sowohl taktile als auch optische Sensoren tragen, finden in der Koordinatenmesstechnik zunehmend Bedeutung. Eine Kombination taktiler und optischer Sensoren ermöglicht es, in einem einzigen Koordinatenmessgerät die Vorteile der hohen Genauigkeit eines taktilen Messsystems mit der Geschwindigkeit eines optischen Messsystems zu kombinieren. Des Weiteren werden Kalibriervorgänge bei Sensorwechseln vermieden, ebenso wie ein eventuelles Umspannen eines Werkstücks.

Klassischerweise ist der Sensorkopf, der auch als Sensorsystem bezeichnet werden kann, mit einem Trägersystem verbunden, welches das Sensorsystem stützt und bewegt. Im Stand der Technik sind verschiedene Trägersysteme bekannt, beispielsweise Portalsysteme, Ständer-, Horizontalarm- und Armsysteme, alle Arten von Robotersystemen und letztlich geschlossene CT-Systeme bei mit Röntgenstrahlen arbeitenden Sensorsystemen. Die Trägersysteme können dabei des Weiteren Systemkomponenten aufweisen, die ein möglichst flexibles Positionieren des Sensorkopfs ermöglichen. Ein Beispiel hierfür ist das unter der Bezeichnung "RDS" vertriebene Dreh-Schwenk-Gelenk der Anmelderin. Darüber hinaus können verschiedene Adapter vorgesehen sein, um die unterschiedlichen Systemkomponenten des Trägersystems untereinander und mit dem Sensorsystem zu verbinden.

Der Einsatz des Messgeräts 10 oder das System 100 sind somit nicht auf den in der Fig. 1 dargestellten Tischaufbau und das entsprechende Trägersystem beschränkt, sondern können auch mit allen anderen Arten von Trägersystemen Verwendung finden. Des Weiteren kann die Messgerät 10 auch allgemein in Multi-Sensor-Messsystemen oder auch in einem Materialmikroskop Anwendung finden.

Das Messgerät 10 weist des Weiteren einen Messtisch 20 auf. An dem Messtisch 20 befindet sich eine Positioniereinrichtung 21. Diese ist insbesondere dazu vorgesehen, um das Messobjekt 12 parallel zu einer X-Achse 22 und zu einer Y-Achse 23 zu positionieren. Die X-Achse 22 und die Y-Achse 23 spannen dabei eine Messebene auf.

Zur Positionierung können beispielsweise ein X-Tisch 24 und ein Y-Tisch 25 vorgesehen sein. Der X-Tisch 24 ist parallel zu der X-Achse 21 und der Y-Tisch 25 ist parallel zu der Y-Achse 22 bewegbar. Beide sind auf einer Grundplatte 26 angeordnet. Die Grundplatte 54 wird von einem Maschinengestell 27 bzw. 27' getragen.

Die Bewegung des X-Tisches 24 und des Y-Tisches 25 wird durch Linearführungen in X-Richtung 28 und in Linearführungen in Y-Richtung 29 geführt. Dieser Aufbau entspricht dem sogenannten "Tischaufbau". Wie voranstehend ausgeführt wurde, sind auch andere Trägersysteme denkbar.

Das Messgerät 10 weist des Weiteren einen Messkopf 15 auf. An dem Messkopf 15 können einer oder mehrere taktile Sensoren 16 angeordnet sein. Des Weiteren ist an dem Messkopf 15 die Messgerät 10 angeordnet. Darüber hinaus können auch noch einer oder mehrere weitere optische Sensoren 18 an oder in dem Messkopf 16 angeordnet sein. Der Messkopf 15 dient also dazu, den einen oder mehrere optische Sensoren 18 und eventuell einen taktilen Sensor 16 mit einer Trägerstruktur, beispielsweise einem Z-Schlitten 30, zu koppeln. Bei dem Messkopf 15 kann es sich um einen geschlossenen Gehäuseaufbau handeln, er kann jedoch auch offen ausgebildet sein. Beispielsweise kann der Messkopf 15 auch die Form einer einfachen Platte aufweisen, an der der eine oder mehrere optische Sensoren 18 und eventuell der taktile Sensor 16 befestigt ist. Darüber hinaus sind auch alle weiteren möglichen Formen zum Koppeln des einen oder der mehreren optische Sensoren 18 und eventuell des taktilen Sensor 16 mit der Trägerstruktur denkbar.

Der Messkopf 15 ist an dem Z-Schlitten 30 gehalten, der in einem Schlittengehäuse 31 parallel zu einer Z-Achse 32 geführt ist. Diese Z-Achse 32 steht senkrecht auf der X-Achse 22 und auf der Y-Achse 23. Die X-Achse 22, die Y-Achse 23 und die Z-Achse 32 bilden somit ein kartesisches Koordinatensystem.

Das Messgerät 10 weist des Weiteren ein Bedienpult 33 auf. Mit dem Bedienpult 72 können die einzelnen Elemente der Messgerät 10 angesteuert werden. Des Weiteren können Eingaben an dem Messgerät 10 vorgegeben werden. Grundsätzlich kann auch vorgesehen sein, dass in dem Bedienpult 33 oder an anderer Stelle eine Anzeigevorrichtung (nicht dargestellt) angeordnet ist, um Messwertausgaben an einen Nutzer der Messgerät 10 zu richten. Eine Steuereinrichtung 19 dient zum steuern oder regeln des Messgeräts 10. Grundsätzlich kann die Steuereinrichtung auch separat und/oder entfernt von dem Messgerät 10 angeordnet sein.

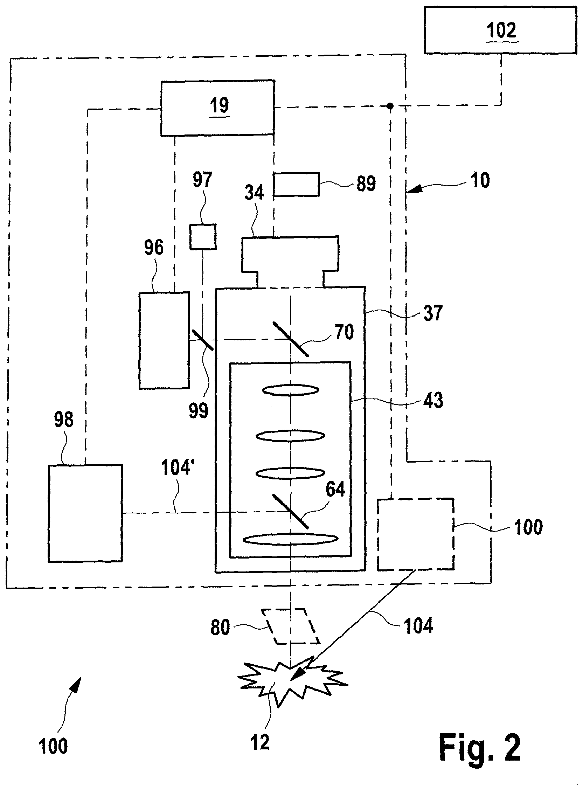

Die Fig. 2 zeigt eine Ausführungsform eines Messsystems 100. Dieses Messsystem 100 weist das Messgerät 10 und des Weiteren eine Umgebungsbeleuchtungsanordnung 102 zum Beleuchten einer Umgebung des Messgeräts 10 auf. Die Umgebungsbeleuchtungsanordnung 102 bildet eine weitere Beleuchtungsanordnung aus. Weitere mögliche weitere Beleuchtungsanordnungen sind mit den Bezugszeichen 97, 98 und 100 bezeichnet und werden im Folgenden noch detaillierter erläutert werden. Grundsätzlich ist die Steuereinrichtung 19 des Messgeräts 10 dazu ausgebildet, mindestens eine weitere Beleuchtungsanordnung 97, 98, 100, 102 zu steuern. Die mindestens eine weitere Beleuchtungsanordnung kann dabei wie im Falle der weiteren Beleuchtungsanordnungen 97, 98, 100 ein Element des Messgeräts 10 selbst sein. Es kann aber auch vorgesehen sein, dass die mindestens eine weitere Beleuchtungsanordnung entfernt von dem Messgerät 10 angeordnet ist, wie im Fall der Umgebungsbeleuchtungsanordnung 102. Die weitere Beleuchtungsanordnung 102 und das Messgerät 10 bilden dann das Messsystem 100.

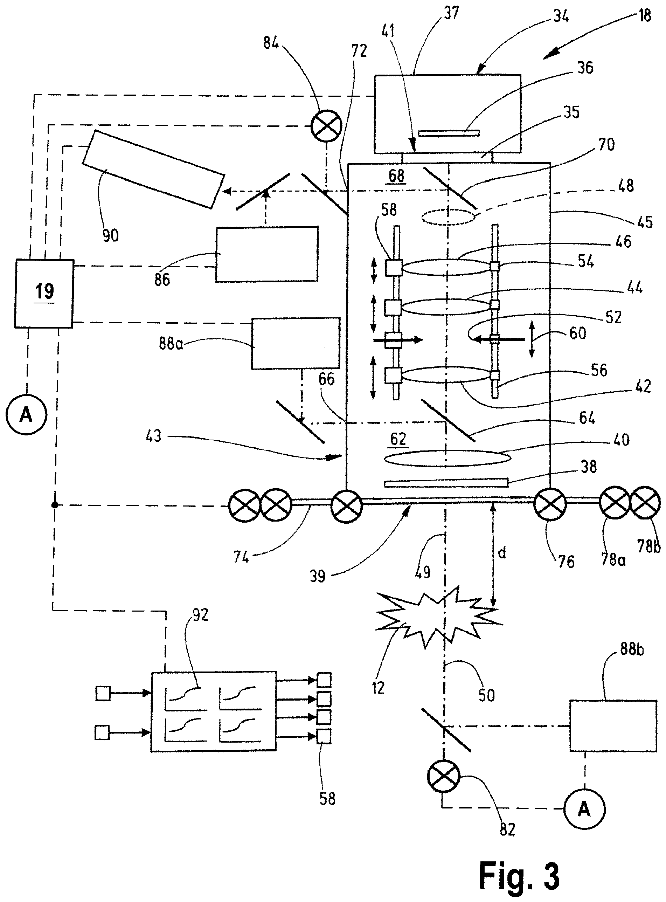

Das Messgerät 10 weist ein Objektiv 43 auf. Dieses Objektiv 43 kann beispielsweise mehrere Linsenelemente oder Linsenelementgruppen aufweisen, wie in Zusammenhang mit der Fig. 3 noch detaillierter beschrieben wird. Das Objektiv 43 kann in einem Gehäuse 37 angeordnet sein. Als optischer Sensor dient beispielsweise eine Kamera 34, die an das Gehäuse 37 angeschlossen ist und durch das Objektiv 43 einen Bilderfassungsbereich 80 auf dem Werkstück 12 erfasst. Ein Steuersignalgeber ist mit 89 bezeichnet. Dieser kann einen Bildaufnahmezeitraum der Kamera 34 erfassen und ein einen Bildaufnahmezeitraum der Kamera 34 repräsentierendes Steuersignal an die Steuereinrichtung 19 weitergeben. Abhängig von dem Steuersignal kann die Steuereinrichtung 19 insbesondere die mindestens eine weitere Beleuchtungsanordnung 97, 98, 100, 102 und eine Messbeleuchtungsanordnung 96 schalten. Dieses geschieht abhängig von dem von dem Steuersignalgeber 89 bereitgestellten Steuersignal. Die Darstellung, Ausgestaltung und Anordnung der Messbeleuchtungsanordnung 96 ist lediglich beispielhaft zu verstehen. Diese wird über einen Strahlteiler bzw. ein Koppelelement 70 in das Objektiv 43 eingekoppelt und der Messbeleuchtungsstrahlengang durchläuft das gesamte Objektiv. Es kann auch grundsätzlich auch hier nach gewähltem Beleuchtungssystem eine andere Anordnung bzw. Einkopplung der Messbeleuchtungsanordnung 96 gegeben sein. Des Weiteren ist eine weitere Beleuchtungsanordnung 97 dargestellt. Dieses kann beispielsweise eine Hellfeld-Auflichtbeleuchtungseinrichtung 97 sein, die in Zusammenhang mit einer Messbeleuchtungsanordnung für ein anderes Messverfahren auch als Markierungsbeleuchtungseinrichtung genutzt werden kann. Die Hellfeld-Auflichtbeleuchtungseinrichtung kann dann beispielsweise über einen weiteren Strahlteiler 99 eingekoppelt werden und das Gesamtobjektiv 43 durchlaufen. Dadurch erleuchtet die Hellfeld-Auflichtbeleuchtungseinrichtung als Markierungseinrichtung den gesamten Bilderfassungsbereich 80. Dies gilt dann in allen Einstellungen des Objektivs 43. Als weiteres Beispiel ist eine Messbeleuchtungsanordnung 98 dargestellt, die in das Objektiv 43 mittels 64 eingekoppelt ist. Hierbei kann es sich wieder um einen Strahlteiler handeln. Es kann somit, wie bereits voranstehend ausgeführt, vorgesehen sein, beispielsweise die weitere Beleuchtungsanordnung 98 als Laser auszubilden und einen Markierungsstrahlengang 104' der weiteren Beleuchtungsanordnung 98 dann mittels des Strahlteilers 64 in den Strahlengang des Objektivs 43 einzukoppeln. Auch auf diese Weise kann dann der Bilderfassungsbereich 80 markiert werden. Die weitere Beleuchtungsanordnung 100 ist außerhalb des Objektivs 43, beispielsweise seitlich neben dem Objektiv 43, angeordnet. Auf diese Weise ist die weitere Beleuchtungsanordnung 100 ebenfalls wieder als Laser ausgebildet und ein Markierungsstrahlengang 104 des Lasers 100 kann dann direkt auf dem Werkstück den Bilderfassungsbereich 80 markieren. Der Markierungsstrahlengang 104 verläuft dann außerhalb des Objektivs 43.

Fig. 3 zeigt ein Ausführungsbeispiel des optischen Sensors 18, wobei der optische Sensor 18 in diesem Ausführungsbeispiel genau genommen mehrere optische Sensoren beinhaltet, die wahlweise vorhanden und verwendet sein können. Der Sensor 18 weist ein Objektiv 43 mit einem Objektivkörper 45 auf. Das Objektiv 43 kann darüber hinaus mit weiteren optischen Sensoren kombiniert werden, etwa mit einem deflektometrisch messenden Sensor. In typischen Ausführungsbeispielen ist der Objektivkörper 45 ein Tubus mit einer Lichteintrittsöffnung 39 und einer Lichtaustrittsöffnung 41, die an gegenüberliegenden Enden des Tubus angeordnet sind. Prinzipiell kann der Objektivkörper 45 jedoch auch eine von einem Tubus abweichende Form haben.

An der Lichtaustrittsöffnung 41 ist eine Schnittstelle 35 ausgebildet, die zum Anschluss einer Kamera 34 dient. Die Kamera kann beispielsweise einen Bildsensor 36 aufweisen. In bevorzugten Ausführungsbeispielen ist die Schnittstelle 35 eine standardisierte bzw. verbreitete Schnittstelle zur Kopplung von Kameras und Objektiven, etwa ein sogenannter F-Mount oder ein sogenannter C-Mount. In einigen Ausführungsbeispielen ist die Schnittstelle 35 jedoch eine proprietäre Schnittstelle, die es insbesondere möglich macht, das Gehäuse 37 der Kamera 34 direkt mit dem Objektivkörper 45 zu verbinden. Prinzipiell können auch andere standardisierte oder proprietäre Schnittstellen zum Anschluss der Kamera 34 an den Objektivkörper 45 verwendet sein.

Im Bereich der Lichteintrittsöffnung 39, die das distale Ende des Objektivs 43 definiert, ist ein Deckglas 38 im Objektivkörper 45 oder am Objektivkörper 45 angeordnet. In einigen Ausführungsbeispielen kann das Deckglas 38 ein Schraubglas sein, das in eine Gewindefassung am distalen Ende des Objektivkörpers 45 eingeschraubt wird. In anderen Ausführungsbeispielen kann das Deckglas 38 in eine geeignete Ausnehmung am Objektivkörper 45 eingeschoben, eingeklipst, eingeklebt oder anderweitig mit dem Objektivkörper 45 ortsfest verbunden sein. In den bevorzugten Ausführungsbeispielen ist das Deckglas 38 so mit dem Objektivkörper 45 verbunden, dass ein Anwender des Koordinatenmessgerätes 10 das Deckglas 38 ohne eine Beschädigung des Objektivs 43 austauschen kann.

In dem dargestellten Ausführungsbeispiel ist das Deckglas 38 eine keilförmige Glasplatte, deren Dicke von einem Rand zum anderen Rand zunimmt, wie dies in der vereinfachten Schnittdarstellung der Fig. 2 dargestellt ist. Das Deckglas 38 besitzt in diesem Fall einen Keilwinkel, der so gewählt ist, dass ein Reflex an der vorderen (zum distalen Ende des Objektivs 43 hin) oder der hinteren Seite des Deckglases 38 nicht auf den Bildsensor 36 der Kamera 34 gelangt. Im dargestellten Ausführungsbeispiel ist das Deckglas 38 so angeordnet, dass seine vordere Seite geneigt bzw. schräg zu der Lichteintrittsöffnung 39 liegt, während die hintere Seite ebenfalls leicht schräg dazu angeordnet ist.

In anderen Ausführungsbeispielen könnte ein Deckglas mit planparallelen Vorder- und Rückseiten leicht schräg zum Bildsensor 36 bzw. der nachfolgend noch näher erläuterten optischen Achse des Objektivs 43 angeordnet sein.

In weiteren Ausführungsbeispielen kann das Deckglas 38 in Form einer dünnen Folie realisiert sein, die im Bereich der Lichteintrittsöffnung 39 des Objektivs 43 eingespannt ist. In einigen Ausführungsbeispielen kann das Deckglas polarisierend sein, so dass das durchtretende Licht polarisiert wird, und/oder das Deckglas kann ein Farbfilter zur Unterdrückung von Umgebungslicht beinhalten.

In dem dargestellten beispielhaften Ausführungsbeispiel der Fig. 3 ist zwischen dem Deckglas 38 und der Lichtaustrittsöffnung 41 des Objektivs 43 ein Linsensystem mit einer ersten Linsengruppe 40, einer zweiten Linsengruppe 42, einer dritten Linsengruppe 44 und einer vierten Linsengruppe 46 angeordnet. In einigen Ausführungsbeispielen ist zwischen der vierten Linsengruppe 46 und der Lichtaustrittsöffnung 41 noch eine fünfte Linsengruppe angeordnet, die hier in gestrichelten Linien dargestellt ist. Die Linsengruppen 40-48 sind in dem Objektivkörper 45 hintereinander zwischen der Lichteintrittsöffnung 39 und der Lichtaustrittsöffnung 41 entlang einer Längsachse 49 des Objektivkörpers 45 angeordnet. Im dargestellten Ausführungsbeispiel erfährt ein die Linsengruppen 40-48 in ihrer jeweiligen Mitte oder Zentrum durchtretender Lichtstrahl keine Ablenkung, so dass die Längsachse 49 mit einer optischen Achse 50 des Objektivs 43 zusammenfällt.

Zwischen der zweiten Linsengruppe 42 und der dritten Linsengruppe 44 ist eine Blende 52 angeordnet. In den bevorzugten Ausführungsbeispielen ist die Blende 52 eine Irisblende, d.h. eine Blende, deren lichter Innendurchmesser variiert werden kann.

Die zweite, dritte und vierte Linsengruppe 42, 44, 46 sowie die Blende 52 sind jeweils mit einem eigenen Schlitten 54 gekoppelt, der entlang von zwei Führungsschienen 56 bewegt werden kann. Ferner sind die drei Linsengruppen und die optische Blende 52 in diesem Ausführungsbeispiel jeweils mit einem elektrischen Antrieb 58 gekoppelt. Mit Hilfe der Antriebe 58 können die zweite, dritte und vierte Linsengruppe sowie die Blende 52 parallel zur optischen Achse 50 verfahren werden, wie das anhand der Pfeile 60 angedeutet ist. Im Gegensatz dazu ist die erste Linsengruppe 40 und die optionale fünfte Linsengruppe 48 in den bevorzugten Ausführungsbeispielen ortsfest in dem Objektivkörper 45 angeordnet.

Wie man in der Fig. 3 erkennen kann, ist bei einigen Ausführungsbeispielen ein Freiraum 62 zwischen der ersten Linsengruppe 40 und der zweiten Linsengruppe 42 vorhanden, der selbst dann bleibt, wenn die zweite Linsengruppe 42 auf einen minimalen Abstand zur ersten Linsengruppe 40 positioniert wurde. Es kann ein Strahlteiler 64 in dem Freiraum 62 auf der optischen Achse 50 angeordnet sein, um wahlweise Licht von einer weiteren Schnittstelle 66 des Objektivs 43 ein- oder auszukoppeln. In den bevorzugten Ausführungsbeispielen ist die zweite Schnittstelle 66 etwa auf Höhe des Strahlteilers 64 am seitlichen Umfang des Objektivkörpers 45 angeordnet.

In ähnlicher Weise ist in einigen Ausführungsbeispielen des Objektivs 43 ein weiterer Freiraum 68, in dem ebenfalls ein Strahlteiler 70 angeordnet ist, zwischen der vierten Linsengruppe 46 und der Lichtaustrittsöffnung 41. Auf Höhe des Strahlteilers 70 befindet sich eine weitere Schnittstelle 72, über die Licht ein- und/oder ausgekoppelt werden kann. In dem dargestellten Ausführungsbeispiel ist der Strahlteiler 70 zwischen der fünften Linsengruppe 48 und der Lichtaustrittsöffnung 41 angeordnet. Alternativ oder ergänzend hierzu könnte der Strahlteiler 70 zwischen der vierten Linsengruppe 46 und der fünften Linsengruppe 48 angeordnet sein, was natürlich einen entsprechenden Freiraum voraussetzt.

In bevorzugten Ausführungsbeispielen besitzt das Objektiv 43 im Bereich der Lichteintrittsöffnung 39 einen Halter 74, an dem verschiedene Lichtquellen 76, 78 angeordnet sind. In dem dargestellten Ausführungsbeispiel trägt der Halter 74 ein Ringlicht mit einer Vielzahl von Lichtquellen 78a, 78b, die rund um den Objektivkörper 45 mit verschiedenen radialen Abständen angeordnet sind. In einigen Ausführungsbeispielen sind die Lichtquellen 78a, 78b in der Lage, verschiedenfarbiges Licht zu erzeugen, etwa weißes Licht, rotes Licht, grünes Licht und blaues Licht sowie Mischungen davon. Die Lichtquellen 78a, 78b können dazu verwendet werden, unterschiedliche Beleuchtungsszenarien in unterschiedlichen Abständen vor der Lichteintrittsöffnung 39 zu erzeugen. Beispielhaft ist bei der Bezugsziffer 12 ein Messobjekt 12 schematisch angedeutet, das in einem Abstand d zu der Lichteintrittsöffnung 39 des Objektivs 43 positioniert ist. Der Abstand d repräsentiert einen Arbeitsabstand zwischen dem Objektiv 43 und dem Messobjekt 12, wobei dieser Arbeitsabstand anhand der Fokussierung des Objektivs 43 variabel einstellbar ist.

Die Lichtquellen 76 sind im vorliegenden Ausführungsbeispiel Lichtquellen, die in den Objektivkörper 45 integriert sind. In einigen Ausführungsbeispielen sind die Lichtquellen 76 außerhalb des Linsensystems in den Objektivkörper 45 integriert, wie dies in Fig. 3 dargestellt ist. In anderen Ausführungsbeispielen (alternativ oder ergänzend) können Lichtquellen 76 so in den Objektivkörper 45 integriert sein, dass das von den Lichtquellen 76 erzeugte Licht zumindest durch einige der Linsengruppen und gegebenenfalls das Deckglas 38 hindurch aus dem Objektivkörper 45 austritt. In diesem Fall ist die Lichteintrittsöffnung 39 gleichzeitig auch eine Lichtaustrittsöffnung.

Mit den Lichtquellen 76, 78 ist es möglich, das Messobjekt 12 variabel zu beleuchten, um wahlweise eine Hellfeld- und/oder eine Dunkelfeldbeleuchtung zu erzeugen. In beiden Fällen handelt es sich um Auflicht, das aus Richtung des Objektivs 43 auf das Messobjekt 12 trifft.

Darüber hinaus kann das Koordinatenmessgerät 10 eine weitere Lichtquelle 82 aufweisen, die eine Durchlichtbeleuchtung des Messobjekts 12 ermöglicht. Dementsprechend ist die Lichtquelle 82 unterhalb des Messobjekts 12 bzw. unterhalb der Werkstückaufnahme des Koordinatenmessgerätes 10 angeordnet. In den bevorzugten Ausführungsbeispielen besitzt das Koordinatenmessgerät 10 daher eine Werkstückaufnahme 12, die mit einer Glasplatte versehen ist, um die Durchlichtbeleuchtung zu ermöglichen.

Schließlich ist in diesen Ausführungsbeispielen eine Auflichtbeleuchtungseinrichtung 84 vorgesehen, die hier über einen weiteren Strahlteiler mit der Schnittstelle 72 gekoppelt sein kann. Die Lichtquelle 84 kann über die Schnittstelle 72 und den Strahlteiler 70 Licht in den gesamten Strahlengang des Objektivs 43 einkoppeln. Das eingekoppelte Licht wird hier über das Linsensystem der ersten bis vierten (fünften) Linsengruppe auf das Messobjekt 12 geworfen.

In gleicher Weise können verschiedene Beleuchtungen über die Schnittstelle 66 und prinzipiell auch über die Lichtaustrittsöffnung 41 in den Strahlengang des Objektivs 43 eingekoppelt werden. Beispielhaft ist ein Gitterprojektor bei der Bezugsziffer 86 dargestellt. Der Gitterprojektor erzeugt ein strukturiertes Lichtmuster, das in diesem Ausführungsbeispiel über zwei Strahlteiler und die Schnittstelle 72 in den Strahlengang des Objektivs 43 eingekoppelt wird. In einigen Ausführungsbeispielen kann eine Lichtquelle ein Laserpointer sein, mit dem einzelne Messpunkte an dem Messobjekt 12 gezielt beleuchtet werden können. In anderen Ausführungsbeispielen kann eine Lichtquelle ein strukturiertes Lichtmuster, etwa ein Streifenmuster oder Gittermuster, erzeugen, welches über das Linsensystem des Objektivs 43 auf das Messobjekt 12 projiziert wird.

Wie in Fig. 3 dargestellt ist, kann das Objektiv 43 auf verschiedene Weise mit optischen Sensoren kombiniert werden, die alternativ oder ergänzend zu der Kamera 34 zur optischen Vermessung des Messobjekts 12 dienen. In der Figur 2 ist lediglich beispielhaft ein erster konfokaler Weißlichtsensor 88a an die Schnittstelle 66 angekoppelt. Alternativ oder ergänzend kann ein konfokaler Weißlichtsensor 88b beispielsweise über einen Strahlteiler in den Beleuchtungspfad für die Durchlichtbeleuchtung 82 eingekoppelt werden. Die Sensoren 88a und 88b können eine punktförmige Messung durchführen.

Mit der Bezugsziffer 90 ist ein Autofokussensor bezeichnet, mit dessen Hilfe die Höhenlage des Messobjekts 12 parallel zur optischen Achse 50 anhand einer Bestimmung der Fokuslage ermittelt werden kann. Darüber hinaus ist eine optische Vermessung des Messobjekts 12 mit Hilfe der Kamera 34 und einer geeigneten Bildauswertung möglich, wie dies den einschlägigen Fachleuten auf diesem Gebiet bekannt ist.

Das Objektiv 43 besitzt in den bevorzugten Ausführungsbeispielen aufgrund der verfahrbaren Linsengruppen 42, 44, 46 und der verstellbaren Blende 52 einen großen Einsatzbereich. In den bevorzugten Ausführungsbeispielen ist eine Vielzahl von Steuerkurven 92 in einem Speicher der Steuereinrichtung 19 oder einem anderen geeigneten Speicher hinterlegt. Die Vielzahl der Steuerkurven 92 bildet in den bevorzugten Ausführungsbeispielen eine 2D-Kurvenschar, mit deren Hilfe die Vergrößerung und die Fokussierung des Objektivs 43 in zahlreichen frei wählbaren Kombinationen eingestellt werden kann. In dem dargestellten Ausführungsbeispiel kann ein Anwender eine gewünschte Vergrößerung und eine gewünschte Fokussierung in die Steuereinrichtung 19 eingeben. Die Steuereinrichtung 19 bestimmt mit Hilfe der Steuerkurven 92 und in Abhängigkeit der gewünschten Vergrößerung und gewünschten Fokussierung individuelle Positionen der zweiten, dritten und vierten Linsengruppe entlang der optischen Achse 50 sowie eine individuelle Position und Öffnung der Blende 52. In einigen Ausführungsbeispielen des neuen Verfahrens kann der Anwender durch Variieren der Fokussierung den Arbeitsabstand d zu einem Messobjekt variieren, ohne dass der mindestens eine Sensor mit Hilfe der Pinole 14 relativ zu dem Messobjekt bewegt werden muss. Beispielsweise ist es so möglich, Strukturen an der Oberfläche eines Messobjekts 12 und Strukturen am Grund einer Bohrung (hier nicht dargestellt) des Messobjekts 12 zu vermessen, indem bei gleichbleibender Vergrößerung lediglich die Fokussierung des Objektivs 43 so variiert wird, dass im einen Fall die Struktur an der Oberfläche des Messobjekts 12 und im anderen Fall die Struktur am Grund der Bohrung in der Fokusebene des Objektivs 43 liegt.

In anderen Varianten kann ein Anwender bei gleichbleibendem oder wechselndem Arbeitsabstand d, der einen Abstand zwischen dem Messobjekt 12 und einer ersten Störkontur, nämlich der Lichteintrittsöffnung 39 des Objektivs 43 bezeichnet, die Vergrößerung des Objektivs 43 variieren, um beispielsweise Details eines zuvor "aus der Vogelperspektive" vermessenen Messobjekts 12 erneut zu vermessen.

Des Weiteren kann ein Anwender in einigen Ausführungsbeispielen die numerische Apertur des Objektivs 43 durch Öffnen oder Schließen der Blende 52 verändern, um auf diese Weise eine gleichbleibende Auflösung bei unterschiedlichen Arbeitsabständen d zu erreichen. Ferner kann ein Anwender die Vergrößerung, Fokussierung, numerische Apertur einzeln oder in Kombination miteinander variieren, um das Objektiv 43 optimal an die Eigenschaften der verschiedenen Sensoren anzupassen.

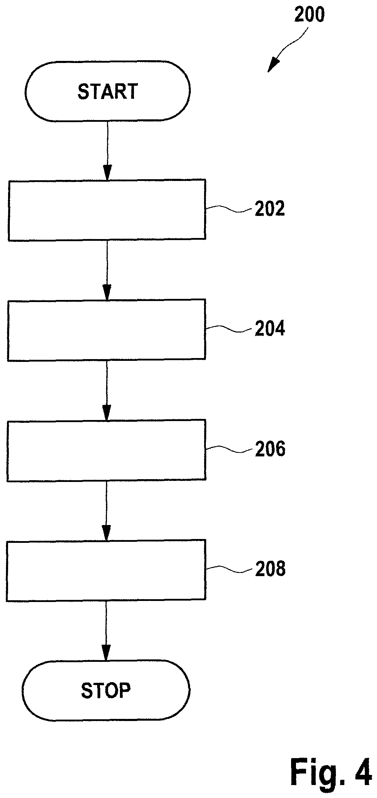

Die Fig. 4 zeigt ein schematisches Ablaufdiagramm eines Verfahrens zur Beleuchtungssteuerung für das Messgerät 10 mit mindestens einem optischen Sensor 34 zur Bildaufnahme in dem Bilderfassungsbereich 80.

Zunächst wird in einem Schritt 102 mindestens ein Bildaufnahmezeitraum festgelegt, in dem mittels des mindestens einen optischen Sensors eine Bildaufnahme erfolgt. Ein Beginn dieses Bildaufnahmezeitraums und dessen Ende sind somit bekannt. Werden mehrere Bildaufnahmezeiträume festgelegt, so werden diese insbesondere mit einer bestimmten Frequenz festgelegt. Daraus ergibt sich entsprechend eine Zyklusdauer, d.h. eine Zeitdauer zwischen dem Beginn zweier aufeinanderfolgender Bildaufnahmezeiträume.

In einem Schritt 204 wird ein Steuersignal bereitgestellt, das den mindestens einen Bildaufnahmezeitraum präsentiert. Beispielsweise kann dies als digitales Signal bereitgestellt sein, das während einer Bildaufnahme des mindestens einen optischen Sensors das Signal "1" ausgibt. Außerhalb des Bildaufnahmezeitraums das Signal "0". Auf diese Weise ist der Steuereinrichtung 19 stets bekannt, ob eine Bildaufnahme erfolgt oder nicht. Es erfolgt nun ein Beleuchten 206 des Bilderfassungsbereichs 80 mit einer Messbeleuchtungsanordnung 96 des Messgeräts 10 während des Bildaufnahmezeitraums abhängig von dem Steuersignal. Wird beispielsweise das Steuersignal auf "1" geschaltet, wird auch die Messbeleuchtungsanordnung eingeschaltet. Schaltet das Steuersignal wieder zurück, wird die Messbeleuchtungsanordnung abgeschaltet. Auf diese Weise ist während des gesamten Bilderfassungsbereichs die Messbeleuchtungsanordnung geschaltet zur Beleuchtung des Bilderfassungsbereichs 80.

Des Weiteren erfolgt ein Schritt 208 des Beleuchtens des Bilderfassungsbereichs mit einer weiteren Beleuchtungsanordnung, wie voranstehend ausgeführt beispielsweise einer Umgebungsbeleuchtungsanordnung oder aber einer Markierungsbeleuchtungseinrichtung. Dieses Beleuchten 208 erfolgt zeitlich außerhalb des Bildaufnahmezeitraums. Zeitlich außerhalb meint dabei zeitlich versetzt, d.h. vor und/oder nach dem Bildaufnahmezeitraum. Beispielsweise kann, wenn das Steuersignal wieder von "1" zu "0" zurückschaltet, vorgesehen sein, dass die mindestens eine weitere Beleuchtungsanordnung eingeschaltet wird. Dies muss jedoch nicht zwingend der Fall sein, wie im Folgenden erläutert wird, kann auch eine vorgegebene Zeitdauer zugewartet werden, bevor die mindestens eine weitere Beleuchtungsanordnung eingeschaltet wird.

Wie bereits voranstehend ausgeführt kann die mindestens eine weitere Beleuchtungsanordnung eine Umgebungsbeleuchtungsanordnung sein. Es kann sich aber auch alternativ oder kumulativ um eine Markierungsbeleuchtungseinrichtung des Messgeräts 10 handeln. Beispielsweise kann eine Hellfeld-Auflichtbeleuchtungseinrichtung 97 des Messgeräts als weitere Beleuchtungsanordnung dienen. Es kann aber auch vorgesehen sein, dass ein Laser oder eine andere separate Lichtquelle als Markierungsbeleuchtungseinrichtung dient.

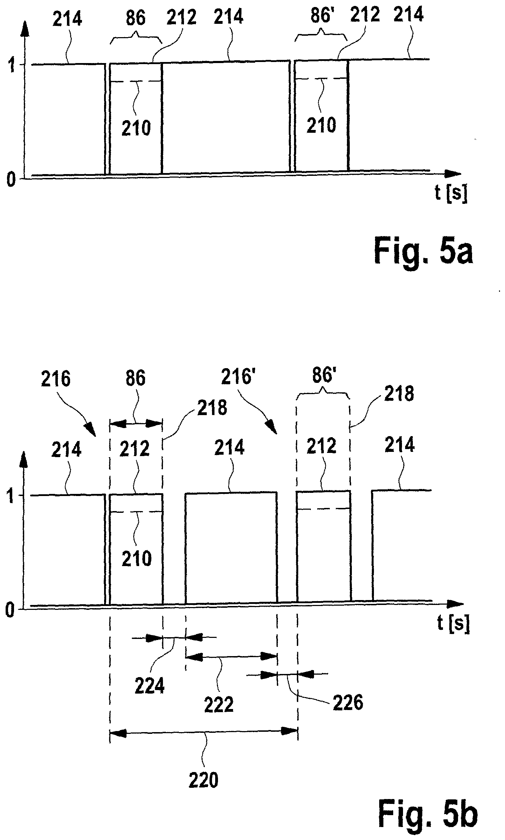

Die Fig. 5a zeigt in einem zeitlichen Ablaufdiagramm ein Ausführungsbeispiel des Verfahrens 200.

Das Steuersignal ist mit dem Bezugszeichen 210 bezeichnet. Dargestellt sind des Weiteren ein erster Bildaufnahmezeitraum 86 und ein zweiter Bildaufnahmezeitraum 86'. Wie zu erkennen ist, ist das Steuersignal 210 während der Bildaufnahmezeiträume 86, 86' auf ein Niveau ungleich null geschaltet. Außerhalb der Bildaufnahmezeiträume 86, 86' liegt es auf Niveau null. Auf diese Weise kann das Steuersignal 210 besonders einfach die Bildaufnahmezeiträume 86, 86' repräsentieren. Die Schaltung der Messraumbeleuchtung 96 erfolgt dann beispielsweise anhand der dargestellten Linie 212. Abhängig von dem Steuersignal 210 wird während der Bildaufnahmezeiträume 86, 86' die Messraumbeleuchtungseinrichtung eingeschaltet, das entsprechende Signal 212 steht auf "1". In dem vorliegenden Beispiel ist es somit mit dem Steuersignal 210 gleichgeschaltet. Selbstverständlich kann dies grundsätzlich auch umgekehrt ausgeführt sein, beispielsweise dass das Steuersignal außerhalb der Bildaufnahmezeiträume 86 ungleich "0" ist und während der Bildaufnahmezeiträume "0" ist.

Die weitere Beleuchtungsanordnung ist entlang der Linie 214 dargestellt. Diese ist invertiert geschaltet. Das bedeutet, dass zeitlich außerhalb der Bildaufnahmezeiträume 86, 86' die weitere Beleuchtungsanordnung eingeschaltet ist, die Linie 214 steht auf "1". Beim Sprung des Steuersignals 210 schaltet auch die weitere Beleuchtungsanordnung 214 und ist während der Bildaufnahmezeiträume 86, 86' ausgeschaltet.

Die Fig. 5b zeigt eine weitere Ausgestaltung des Verfahrens. Gleiche Elemente sind grundsätzlich mit den gleichen Bezugszeichen wie in der Fig. 5a bezeichnet und werden nicht erneut erläutert.

Grundsätzlich kann es auftreten, dass bei beliebiger Lage und Länge der Bildaufnahmezeiträume 86 die dazwischenliegenden Zeitintervalle zu kurz werden und die Gefahr steigt, dass eine weitere Beleuchtungsanordnung in einen Bildaufnahmezeitraum 86, 86' hineinleuchtet. Daher macht man sich zunutze, dass ein optischer Sensor, insbesondere eine Kamera 34, in der Regel mit einer festen Bildaufnahmefrequenz arbeitet. In der Praxis werden für ein bewegtes Bild in der Regel 30 Hz gefordert, für seine Zyklusdauer 220 ergeben sich dann entsprechend 33,3 Millisekunden. Daraus ist abhängig von der Kamera und deren Aufnahmefrequenz bekannt, wie weit ein jeweiliger Beginn 216, 216' aufeinanderfolgender Bildaufnahmezeiträume 86, 86' voneinander beabstandet sind, nämlich genau um die Zyklusdauer 220.

Die Länge des Bildaufnahmezeitraums der Kamera für ein Bild kann grundsätzlich beliebig gewählt werden. Insbesondere weisen Kameras jedoch einen Bildaufnahmezeitraum von etwa 5 Millisekunden für die Belichtung auf. Hieraus ergibt sich die zeitliche Länge des Bildaufnahmezeitraums 86, 86'. Somit ist nun die Lage der jeweiligen Enden der Bilderfassungszeiträume 86, 86' bekannt. Somit kann dann beispielsweise fest eingerichtet sein, dass um eine erste Zeitdauer 224 zugewartet wird, nachdem eine Änderung des Steuersignals eingetreten ist, bevor die weitere Beleuchtungsanordnung 214 eingeschaltet wird. Beispielsweise kann diese erste Zeitdauer 224 auf 1 Millisekunde gesetzt werden. Auf diese Weise kann zuverlässig ein Hineinleuchten in den Bilderfassungsbereich 86, 86' vermieden werden. Unter Kenntnis der Zyklusdauer 120, der Dauer des Bildaufnahmezeitraums 86, 86' und der ersten Zeitdauer 24 ist nunmehr bekannt, wie groß die Zeitspanne ist, die für eine Beleuchtung mittels der weiteren Beleuchtungsanordnung zur Verfügung steht. Somit kann abhängig von der Zyklusdauer eine Länge des Beleuchtungszeitraums mittels der weiteren Beleuchtungsanordnung, der mit 222 bezeichnet ist, festgelegt werden. Hieraus ergibt sich dann eine zweite Zeitdauer 226, um die versetzt die weitere Beleuchtungsanordnung vor dem Beginn des nächsten Beleuchtungszeitraums 86' endet. Mit anderen Worten ergibt sich somit ausgehend von dem Beginn eines Bildaufnahmezeitraums 86 aus der Summe der Länge des Bildaufnahmezeitraums 86, der ersten Zeitdauer 24 und der Länge des Beleuchtungszeitraums mittels der weiteren Beleuchtungsanordnung 222 das Ende des Beleuchtungszeitraums 222 mittels der weiteren Beleuchtungsanordnung. Diese Summe ist stets kleiner als die Zyklusdauer 220.

Es ist abhängig von der Zyklusdauer vorgesehen, dass der Bildaufnahmezeitraum kleiner als 20 % der Zyklusdauer ist. Des Weiteren ist vorgesehen, dass der Einschaltzeitraum 222 der weiteren Beleuchtungsanordnung außerhalb des Bildaufnahmezeitraums kleiner als 67 % der Länge der Zyklusdauer ist.

Den voranstehenden Einstellungen überlagert kann natürlich weiterhin vorgesehen sein, dass eine weitere Beleuchtungsanordnung in jedem Fall abgeschaltet wird, wenn eine Bildaufnahme erfolgt, d.h. aus welchen Gründen auch immer das Steuersignal 210 von "0" auf "1" springt. Des Weiteren kann beispielsweise eine Regel vorgesehen sein, wie ein Ende eine Bildaufnahmesequenz erfasst. Beispielsweise kann vorgesehen sein, dass, wenn mehr als die Länge einer Zyklusdauer 220 vergangen ist, seit das Steuersignal von "1" auf "0" gesprungen ist, die mindestens eine Weiterbeleuchtungseinrichtung wieder eingeschaltet wird, da davon ausgegangen werden kann, dass eine Bildaufnahmesequenz beendet ist. Die weitere Beleuchtungsanordnung kann dann dauerhaft eingeschaltet bleiben, bis wieder eine Änderung des Steuersignals 210 eintritt.

Somit ist dann bei dem ersten Bildaufnahmezeitraum 86 auch ein unmittelbares Ausschalten der weiteren Beleuchtungsanordnung zu Beginn des Bildaufnahmezeitraums 86 gegeben, wie in der Fig. 5b ersichtlich ist. Bei allen darauffolgenden Bildaufnahmezeiträumen 86' wäre dann jedoch ein rechtzeitiges Abschalten versetzt um den Zeitraum 226 bereitgestellt und ein Nachleuchten der weiteren Beleuchtungsanordnung in die Bildaufnahme hinein sicher vermieden.

## Patentansprüche

1. Koordinatenmessgerät mit mindestens einem optischen Sensor (34, 88) zur Bildaufnahme in einem Bilderfassungsbereich (80) während eines Bildaufnahmezeitraums (86) zum Inspizieren eines Messobjekts (12), einem Steuersignalgeber (89), der ein den Bildaufnahmezeitraum (86) repräsentierendes Steuersignal bereitstellt, einer Messbeleuchtungsanordnung (96) zum Beleuchten des Bilderfassungsbereichs (80), und einer Steuereinrichtung (19), **dadurch gekennzeichnet, dass** die Steuereinrichtung (19) dazu ausgebildet ist, die Messbeleuchtungsanordnung (96) nur während des Bildaufnahmezeitraums (86) abhängig von dem Steuersignal einzuschalten, und wobei die Steuereinrichtung (19) des Weiteren dazu ausgebildet ist, mindestens eine weitere Beleuchtungsanordnung (100) abhängig von dem Steuersignal nur zeitlich außerhalb des Bildaufnahmezeitraums (86) einzuschalten, wobei das Koordinatenmessgerät (10) die weitere Beleuchtungsanordnung (97, 98, 100) aufweist, wobei die weitere Beleuchtungsanordnung (100) eine Markierungsbeleuchtungseinrichtung zum Markieren des Bilderfassungsbereichs (80) ist, wobei das Koordinatenmessgerät (10) ein Objektiv (43) aufweist, und wobei eine Bildaufnahme des mindestens einen optischen Sensors (34) durch das Objektiv (43) erfolgt, wobei das Objektiv (43) ein Zoom-Objektiv (43) ist, wobei ein Messbeleuchtungsstrahlengang der Messbeleuchtungsanordnung (96) durch das gesamte Objektiv (43) verläuft, wobei die Markierungsbeleuchtungseinrichtung ein Laser (100) ist, und wobei der Laser (98, 100) derart angeordnet ist, dass ein Markierungsstrahlengang (104) des Lasers (100) außerhalb des Objektivs (43) verläuft.

2. Koordinatenmessgerät nach Anspruch 1, **dadurch gekennzeichnet, dass** genau ein optischer Sensor vorgesehen ist, wobei der optische Sensor (34) eine Kamera ist.

3. Verfahren (200) zur Beleuchtungssteuerung für ein Koordinatenmessgerät (10) mit mindestens einem optischen Sensors (34) zur Bildaufnahme in einem Bilderfassungsbereich (80) zum Inspizieren eines Messobjekts (12), mit den folgenden Schritten:
• Festlegen (202) mindestens eines Bildaufnahmezeitraums (86), in dem mittels des mindestens einen optischen Sensors eine Bildaufnahme erfolgt;
• Bereitstellen (204) eines Steuersignals, das den mindestens einen Bildaufnahmezeitraum (86) repräsentiert;
• Beleuchten (206) des Bilderfassungsbereich (80) mit einer Messbeleuchtungsanordnung (96) des Koordinatenmessgeräts (10) durch ein Objektiv (43) des Koordinatenmessgeräts (10) nur während des Bildaufnahmezeitraums (86) abhängig von dem Steuersignal; und
• Beleuchten (208) des Bilderfassungsbereichs (80) mit mindestens einer weiteren Beleuchtungsanordnung (100) nur zeitlich außerhalb des Bildaufnahmezeitraums (86) abhängig von dem Steuersignal, wobei die weitere Beleuchtungsanordnung (100) eine Markierungsbeleuchtungseinrichtung zum Markieren des Bilderfassungsbereichs (80) ist, wobei die Markierungsbeleuchtungseinrichtung ein Laser (100) ist, und wobei der Laser (100) derart angeordnet ist, dass ein Markierungsstrahlengang (104) des Lasers (100) außerhalb des Objektivs (43) verläuft;
wobei das Beleuchten mit der mindestens einen weiteren Beleuchtungsanordnung (100) um eine erste Zeitdauer (224) versetzt nach einem Ende des mindestens einen Bildaufnahmezeitraums (86) beginnt, wobei das Beleuchten mit der mindestens einen weiteren Beleuchtungsanordnung (100) um eine zweite Zeitdauer (226) versetzt vor einem Beginn des mindestens einen Bildaufnahmezeitraums (86) endet, wobei eine Mehrzahl von Bildaufnahmezeiträumen (86, 86') festgelegt ist, wobei ein jeweiliger Beginn (216, 216') aufeinanderfolgender Bildaufnahmezeiträume (86, 86') zeitlich um eine Zyklusdauer (220) voneinander beabstandet sind, wobei die Länge des Bildaufnahmezeitraums (86) kleiner als 20% der Zyklusdauer (220) ist, wobei eine Länge eines Einschaltzeitraums (222) der weiteren Beleuchtungsanordnung außerhalb des Bildaufnahmezeitraums (86) kleiner als 67% der Länge der Zyklusdauer (220) ist.

4. Verfahren nach Anspruch 3, **dadurch gekennzeichnet, dass** die erste und/oder die zweite Zeitdauer (224, 226) eine Länge von mindestens 0,5 ms und höchstens 2 ms aufweist, insbesondere wobei die Länge 1 ms ist.

## Claims

1. Coordinate measuring machine comprising at least one optical sensor (34, 88) for recording an image in an image capture region (80) during an image recording time interval (86) for the purposes of inspecting a measurement object (12), a control signal transducer (89) which provides a control signal that represents the image recording time interval (86), a measurement illumination arrangement (96) for illuminating the image capture region (80) and a control device (19), **characterized in that** the control device (19) is embodied to activate the measurement illumination arrangement (96) on the basis of the control signal only during the image recording time interval (86) and wherein the control device (19) is furthermore embodied to activate at least one further illumination arrangement (100) on the basis of the control signal only temporally outside of the image recording time (86), wherein the coordinate measuring machine (10) comprises the further illumination arrangement (97, 98, 100), wherein the further illumination arrangement (100) is a marking illumination device for marking the image capture region (80), wherein the coordinate measuring machine (10) comprises a lens (43) and wherein an image recording by the at least one optical sensor (34) is implemented through the lens (43), wherein the lens (43) is a zoom lens (43), wherein a measurement illumination beam path of the measurement illumination arrangement (96) extends through the entire lens (43), wherein the marking illumination device is a laser (100) and wherein the laser (98, 100) is arranged in such a way that a marking beam path (104) of the laser (100) extends outside of the lens (43).

2. Coordinate measuring machine according to Claim 1, **characterized in that** provision is made of exactly one optical sensor, when the optical sensor (34) is a camera.

3. Method (200) for controlling the illumination of a coordinate measuring machine (10) comprising at least one optical sensor (34) for recording an image in an image capture region (80) for the purposes of inspecting a measurement object (12), including the following steps:
• setting (202) at least one image recording time interval (86), during which an image is recorded by means of the at least one optical sensor;
• providing (204) a control signal which represents the at least one image recording time interval (86);
• illuminating (206) the image capture region (80) with a measurement illumination arrangement (96) of the coordinate measuring machine (10) through a lens (43) of the coordinate measuring machine (10) only during the image recording time interval (86) on the basis of the control signal; and
• illuminating (208) the image capture region (80) with at least one further illumination arrangement (100) on the basis of the control signal only temporally outside of the image recording time interval (86), wherein the further illumination arrangement (100) is a marking illumination device for marking the image capture region (80), wherein the marking illumination device is a laser (100) and wherein the laser (100) is arranged in such a way that a marking beam path (104) of the laser (100) extends outside of the lens (43);
wherein the illumination with the at least one further illumination arrangement (100) starts offset by a first time duration (224) after the end of the at least one image recording time period (86), wherein the illumination with the at least one further illumination arrangement (100) ends offset by a second time duration (226) before the start of the at least one image recording time interval (86), wherein a plurality of image recording time intervals (86, 86') are set, wherein respective starts (216, 216') of successive image recording time intervals (86, 86') are temporally spaced apart from one another by a cycle duration (220), wherein the length of the image recording time interval (86) is less than 20% of the cycle duration (220), wherein the length of an activation time interval (222) of the further illumination arrangement outside of the image recording time interval (86) is less than 67% of the length of the cycle duration (220).

4. Method according to Claim 3, **characterized in that** the first and/or the second time duration (224, 226) has a length of at least 0.5 ms and at most 2 ms, in particular wherein the length is 1 ms.

## Revendications

1. Appareil de mesure de coordonnées, comprenant au moins un capteur optique (34, 88) pour une prise de vue dans une zone de capture d'image (80) pendant une période de prise de vue (86) afin d'inspecter un objet de mesure (12), un émetteur de signal de commande (89) qui fournit un signal de commande représentant la période de prise de vue (86), un ensemble d'éclairage de mesure (96) pour éclairer la zone de capture d'image (80), et un dispositif de commande (19), **caractérisé en ce que** le dispositif de commande (19) est réalisé pour mettre en marche l'ensemble d'éclairage de mesure (96) uniquement pendant la période de prise de vue (86) en fonction du signal de commande, et dans lequel le dispositif de commande (19) est en outre réalisé pour ne mettre en marche au moins un autre ensemble d'éclairage (100) en fonction du signal de commande que temporellement en dehors de la période de prise de vue (86), l'appareil de mesure de coordonnées (10) présentant l'autre ensemble d'éclairage (97, 98, 100), l'autre ensemble d'éclairage (100) étant un dispositif d'éclairage de marquage pour marquer la zone de capture d'image (80), l'appareil de mesure de coordonnées (10) présentant un objectif (43), et dans lequel une prise de vue dudit au moins un capteur optique (34) est effectuée par l'objectif (43), l'objectif (43) étant un objectif zoom (43), dans lequel une trajectoire de faisceau d'éclairage de mesure de l'ensemble d'éclairage de mesure (96) s'étend à travers l'ensemble de l'objectif (43), le dispositif d'éclairage de marquage étant un laser (100), et le laser (98, 100) étant disposé de telle sorte qu'une trajectoire de faisceau de marquage (104) du laser (100) s'étend à l'extérieur de l'objectif (43).

2. Appareil de mesure de coordonnées selon la revendication 1, **caractérisé en ce qu'**exactement un capteur optique est prévu, le capteur optique (34) étant une caméra.

3. Procédé (200) de commande d'éclairage pour un appareil de mesure de coordonnées (10) comprenant au moins un capteur optique (34) pour une prise de vue dans une zone de capture d'image (80) afin d'inspecter un objet à mesurer (12), comprenant les étapes suivantes consistant à :
• établir (202) au moins une période de prise de vue (86) dans laquelle une prise de vue est effectuée au moyen dudit au moins un capteur optique ;
• fournir (204) un signal de commande qui représente ladite au moins une période de prise de vue (86) ;
• éclairer (206) la zone de capture d'image (80) avec un ensemble d'éclairage de mesure (96) de l'appareil de mesure de coordonnées (10) par un objectif (43) de l'appareil de mesure de coordonnées (10) uniquement pendant la période de prise de vue (86) en fonction du signal de commande ; et
• éclairer (208) la zone de capture d'image (80) par au moins un autre ensemble d'éclairage (100) uniquement temporellement en dehors de la période de prise de vue (86) en fonction du signal de commande, l'autre ensemble d'éclairage (100) étant un dispositif d'éclairage de marquage pour marquer la zone de capture d'image (80), le dispositif d'éclairage de marquage étant un laser (100), et le laser (100) étant disposé de telle sorte qu'une trajectoire de faisceau de marquage (104) du laser (100) s'étend à l'extérieur de l'objectif (43) ;
dans lequel l'éclairage par ledit au moins un autre ensemble d'éclairage (100) commence de manière décalée d'une première durée (224) après la fin de ladite au moins une période de prise de vue (86), l'éclairage par ledit au moins un autre ensemble d'éclairage (100) se terminant de manière décalée d'une deuxième durée (226) avant le début de ladite au moins une période de prise de vue (86), dans lequel une pluralité de périodes de prise de vue (86, 86') est établie, les débuts respectifs (216, 216') de périodes de prise de vue successives (86, 86') étant espacés les uns des autres dans le temps d'une durée de cycle (220), la longueur de la période de prise de vue (86) étant inférieure à 20 % de la durée de cycle (220), et une longueur d'une période de fonctionnement (222) de l'autre ensemble d'éclairage en dehors de la période de prise de vue (86) étant inférieure à 67 % de la longueur de la durée de cycle (220).

4. Procédé selon la revendication 3, **caractérisé en ce que** la première et/ou la deuxième durée (224, 226) présente(nt) une longueur au moins de 0,5 ms et au plus de 2 ms, la longueur étant en particulier égale à 1 ms.
